# EUROPÄISCHE PATENTSCHRIFT

(11) **EP 4 321 764 B1**
(45) Veröffentlichungstag und Bekanntmachung des Hinweises auf die Patenterteilung: **01.10.2025**
(21) Anmeldenummer: 23188828.0
(22) Anmeldetag: 01.08.2023
(51) Int. Cl.: F16C 29/00, A47B 88/483

(54) **SCHLITTEN FÜR EIN LINEARES FÜHRUNGSSYSTEM UND LINEARES FÜHRUNGSSYSTEM MIT EINEM SOLCHEN SCHLITTEN**
CARRIAGE FOR A LINEAR GUIDANCE SYSTEM AND LINEAR GUIDANCE SYSTEM COMPRISING SUCH A CARRIAGE
CHARIOT POUR UN SYSTÈME DE GUIDAGE LINÉAIRE ET SYSTÈME DE GUIDAGE LINÉAIRE COMPRENANT UN TEL CHARIOT

(30) Priorität: 12.08.2022 DE 102022120440
(43) Veröffentlichungstag der Anmeldung: 14.02.2024
(73) Patentinhaber: Accuride International GmbH, 65582 Diez/Lahn (DE)
(72) Erfinder: NEIDHÖFER, Patrick, 56377 Seelbach (DE); QUIREIN, Thomas, 65582 DIEZ (DE)
(74) Vertreter: WSL Patentanwälte Partnerschaft mbB

(56) Entgegenhaltungen:
- WO-A1-2021/209301
- DE-A1- 4 242 475
- US-A1- 2006 062 498

## Beschreibung

Die vorliegende Erfindung betrifft einen Schlitten für ein lineares Führungssystem, wobei das lineare Führungssystem ein Schienenelement mit zwei zueinander hin zeigenden Laufflächen und den relativ gegenüber dem Schienenelement in und entgegen einer Auszugsrichtung beweglichen Schlitten umfasst, wobei der Schlitten aufweist: einen Grundkörper, ein Paar aus einem ersten und einem zweiten Gleiter mit voneinander weg zeigenden Gleitflächen, wobei die Gleitflächen des ersten und des zweiten Gleiters mit jeweils einer der Laufflächen in Reibeingriff bringbar sind und wobei der erste Gleiter in einer Hochrichtung senkrecht zu der Auszugsrichtung beweglich gegenüber dem Grundkörper an dem Grundkörper gelagert ist, und ein Federelement, wobei das Federelement derart an dem Grundkörper gelagert ist, dass das Federelement den ersten Gleiter in der Hochrichtung von dem zweiten Gleiter weg vorspannt.

Die vorliegende Erfindung betrifft zudem ein lineares Führungssystem mit einem derartigen Schlitten und einem Schienenelement, wobei das Schienenelement zwei zueinander hin zeigende Laufflächen aufweist, wobei der Schlitten und das Schienenelement in und entgegen der Auszugsrichtung linear gegeneinander verschiebbar sind und wobei der erste und der zweite Gleiter mit jeweils einer der Laufflächen des Schienenelements in Reibeingriff sind.

Lineare Führungssysteme mit einem Schlitten und einem Schienenelement, wobei zwischen dem Schlitten und den Laufflächen des Schienenelements an dem Schlitten angeordnete Wälzkörper vorgesehen sind, sind aus dem Stand der Technik bekannt. Sie werden in unterschiedlichen Haushaltsgeräten, aber auch im Automobilbau und vielen weiteren Anwendungsbereichen eingesetzt. Um ein möglichst reibungsarmes Verschieben des Schlittens gegenüber dem Schienenelement zu ermöglichen, sind zwischen dem Schienenelement und dem Schlitten Wälzkörper angeordnet, wobei die Wälzkörper bei einer Relativbewegung des Schlittens und des Schienenelements auf der Oberfläche der Laufflächen des Schienenelements abrollen oder gegenüber der Oberfläche der Laufflächen eine Gleitbewegung ausführen. Die dabei entstehende Roll- und/oder Gleitreibung ist geringer als eine unmittelbare Gleitreibung zwischen dem Schlitten und dem Schienenelement. Allerdings ist es in einer solchen Konstruktion eines linearen Führungssystems schwierig, die zum Verschieben des Schlittens gegenüber dem Schienenelement notwendige Kraft präzise einzustellen. Zudem kann die Position des Schlittens relativ zu dem Schienenelement durch die Wälzkörper nicht präzise definiert werden.

Daher ist aus der WO 2021/209301 A1 ein modifizierter Schlitten für ein lineares Führungssystem der eingangs genannten Art sowie ein lineares Führungssystem mit einem derartigen Schlitten und einem Schienenelement bekannt.

Demgegenüber liegt der vorliegenden Erfindung die Aufgabe zugrunde, einen Schlitten für ein lineares Führungssystem bereitzustellen, der ein weiter verringertes Spiel gegenüber dem Schienenelement aufweist.

Zur Lösung dieser Aufgabe wird ein Schlitten für ein lineares Führungssystem gemäß dem unabhängigen Anspruch 1 der vorliegenden Anmeldung vorgeschlagen. Dazu weist zumindest der Grundkörper oder der erste Gleiter des Schlittens der eingangs genannten Art zusätzlich eine Spielreduzierungseinrichtung auf. Diese Spielreduzierungseinrichtung ist erfindungsgemäß derart ausgestaltet, dass der erste Gleiter im Wesentlichen spielfrei an dem Grundkörper gelagert ist, sodass zumindest eine Drehbewegung des Grundkörpers relativ zu dem Gleiter um eine zu der Hochrichtung parallele Drehachse durch die Spielreduzierungseinrichtung blockiert ist oder eine Drehbewegung des Grundkörpers relativ zu dem Gleiter um eine zu der Hochrichtung und der Auszugsrichtung senkrechte Drehachse durch die Spielreduzierungseinrichtung blockiert ist. Der erste Gleiter umfasst eine länglich ausgedehnte, sich in der Auszugsrichtung erstreckende Friktionsbacke, die zwei, sich vorzugsweise parallel zu der Auszugsrichtung erstreckende, Seitenflächen, zwei sich, vorzugsweise parallel zu der Hochrichtung erstreckende, Stirnflächen und die Gleitfläche aufweist.

Die Spielreduzierungseinrichtung weist zwei sich in der Hochrichtung erstreckende Schienenrippen und eine sich in der Hochrichtung erstreckende Führungsrippe aufweist. Dabei sind entweder die zwei Schienenrippen auf einer der Stirnflächen der Friktionsbacke und die Führungsrippe auf einer zu der Stirnfläche hinzeigenden Stützfläche des Grundkörpers angeordnet oder die Führungsrippe ist auf einer der Stirnflächen der Friktionsbacke und die zwei Schienenrippen sind auf der zu der Stirnfläche hin zeigenden Stützfläche des Grundkörpers angeordnet. Die Führungsrippe und die zwei Schienenrippen verlaufen parallel zueinander, wobei die Führungsrippe mit den zwei Schienenrippen in Kontakt ist.

Die vorliegende Erfindung betrifft zunächst einmal einen derartigen Schlitten für ein lineares Führungssystem unabhängig von der Ausgestaltung des für das lineare Führungssystem notwendigen Schienenelements.

Im Sinne der vorliegenden Anmeldung bezeichnet die Auszugsrichtung diejenige Richtung, in und entgegen der der Schlitten im am Schienenelement montierten Zustand gegenüber dem Schienenelement linear verschiebbar ist. Legt man ein Koordinatensystem in das lineare Führungssystem, so wird die Auszugsrichtung als X-Achse eines solchen Koordinatensystems festgelegt.

Als Hochrichtung wird im Sinne der vorliegenden Anmeldung eine Richtung senkrecht zu der Auszugsrichtung verstanden, die sich im Wesentlichen parallel zu einem Schienenrücken des Schienenelements erstreckt. Mit anderen Worten ausgedrückt ist die Hochrichtung parallel zur Federkraft, welche das Federelement auf den ersten Gleiter ausübt. Die Hochrichtung verbindet den ersten und den zweiten Gleiter aus dem Paar von Gleitern. Dabei wird die Bezeichnung Hochrichtung unabhängig von der Einbaulage des linearen Führungssystems, d.h. der Ausrichtung des Schienenrückens, verwendet. In dem oben genannten Koordinatensystem definiert die Hochrichtung die Y-Achse.

Eine dritte Achse, die senkrecht zu der Hochrichtung und senkrecht zu der Auszugsrichtung angeordnet ist, definiert die Z-Achse des oben genannten Koordinatensystems. Es versteht sich, dass diese Z-Achse im Wesentlichen senkrecht zum Schienenrücken orientiert ist.

Es hat sich gezeigt, dass bekannte Schlitten für ein lineares Führungssystem nach dem Zusammenfügen des Schlittens und des Schienenelements, dazu neigen, bei Einleitung von Drehmomenten in den Grundkörper eine Kipp- oder Schwenkbewegung des Grundkörpers gegenüber den mit den Laufflächen des Schienenelements in Kontakt stehenden ersten und zweiten Gleitern zu erlauben. Ein solches Spiel, welches eine Drehbewegung des Schlittens um die Hochrichtung oder um eine zu der Hochrichtung und der Auszugsrichtung senkrechte Drehachse zulässt, kann für den Anwender eines linearen Führungssystems akustische und haptische Nachteile haben.

Die aus dem Stand der Technik bekannten Maßnahmen widmen sich der Aufgabe, eine mögliche Drehbewegung zwischen dem Grundkörper und den Gleitern, d.h. im verbauten Zustand zwischen dem Grundkörper und dem Schienenelement, durch zusätzliche Abstützung des Grundkörpers am Schienenelement auszugleichen. Im Gegensatz dazu ist es die der vorliegenden Erfindung zugrundeliegende Idee, das Spiel zumindest des Grundkörpers gegenüber zumindest dem ersten Gleiter, vorzugsweise gegenüber dem ersten und dem zweiten Gleiter, zu reduzieren. Zu diesem Zweck ist an dem Grundkörper oder an zumindest dem ersten Gleiter oder an beiden oder an dem Grundkörper und den ersten und zweiten Gleitern eine Spielreduzierungseinrichtung vorgesehen.

Die Spielreduzierungseinrichtung dient erfindungsgemäß gezielt der Blockierung von Drehbewegungen des Grundkörpers relativ zu dem Gleiter um eine zur Hochrichtung (Y-Achse) parallele Drehachse und/oder um eine zu der Hochrichtung (Y-Achse) und der Auszugsrichtung (X-Achse) senkrechte Drehachse (eine solche Drehachse ist parallel zur Z-Achse).

Grundsätzlich wäre es wünschenswert, das Spiel mittels der Spielreduzierungseinrichtung so zu reduzieren, dass Drehbewegungen des Grundkörpers relativ zu dem Gleiter sowohl um die zur Hochrichtung parallele Drehachse als auch um die zu der Hochrichtung und der Auszugsrichtung senkrechte Drehachse blockiert sind.

Allerdings kann eine solche Blockierung von Dreh- oder Schwenkbewegungen des Grundkörpers relativ zum ersten und/oder zweiten Gleiter um beide genannten Drehachsen zu einem Versagen der linearen Beweglichkeit des ersten/zweiten Gleiters gegenüber dem Grundkörper in der Hochrichtung führen. Daher ist in einer Ausführungsform der Erfindung die Spielreduzierungseinrichtung derart ausgestaltet, dass sie nur eine Drehbewegung des Grundkörpers relativ zu dem Gleiter um eine zu der Hochrichtung parallele Drehachse spielfrei blockiert oder eine Drehbewegung des Grundkörpers relativ zu dem Gleiter um eine zu der Hochrichtung und der Auszugsrichtung senkrechte Drehachse spielfrei blockiert, während eine lineare Bewegung des Gleiters relativ zum Grundkörper in Hochrichtung möglich bleibt.

In einer Ausführungsform der Erfindung ist die Spielreduzierungseinrichtung derart ausgestaltet, dass entweder der erste und/oder zweite Gleiter in der Auszugsrichtung ein geringeres Spiel gegenüber dem Grundkörper aufweist als in einer zu der Auszugsrichtung und der Hochrichtung senkrechten Richtung oder aber der erste und/oder zweite Gleiter in der zu der Auszugsrichtung und der Hochrichtung senkrechten Richtung ein geringeres Spiel gegenüber dem Grundkörper aufweist als in der Auszugsrichtung.

In einer Ausführungsform hängt die Wahl der vollständig blockierten oder zumindest stärker eingeschränkten Drehbewegung von der Einbaulage des linearen Führungssystems ab. Man spricht von einem vertikalen Einbau eines linearen Führungssystems, wenn der Schienenrücken des Schienenelements im Wesentlichen vertikal ausgerichtet ist. Die Hochrichtung des Gleiters ist dann ebenfalls vertikal. In einer solchen Einbaulage ist es von Vorteil, wenn eine Drehbewegung um eine zu der Hochrichtung und der Auszugsrichtung senkrechte Drehachse blockiert ist.

Von einer horizontalen Einbaulage spricht man, wenn der Schienenrücken des Schienenelements im Wesentlichen horizontal orientiert ist. In einer solchen Einbaulage ist dann auch die Hochrichtung des Schlittens im Wesentlichen horizontal. In einer solchen Einbaulage ist es zweckmäßig, wenn eine Drehbewegung des Grundkörpers relativ zu dem Gleiter um die Hochrichtung, insbesondere nur um die Hochrichtung, vollständig blockiert oder zumindest stärker eingeschränkt ist.

Der erste und der zweite Gleiter sind Bauteile, die aufgrund ihrer geometrischen Ausgestaltung und/oder ihrer Montage bzw. Festlegung am Grundkörper mit ihren Gleitflächen auf den Laufflächen des Schienenelements ausschließlich gleiten, aber nicht abrollen können. Ein Beispiel für einen solchen Gleiter ist ein Bauteil mit einer zylindrischen bzw. teil-zylindrischen Oberfläche, welche die Gleitfläche bildet, wobei die Zylinderachse im Wesentlichen in der Auszugsrichtung des Schlittens ausgerichtet ist. Es versteht sich, dass eine solche zylindrische Gleitfläche bei der angegebenen Ausrichtung auf der jeweiligen Lauffläche gleiten, aber nicht auf dieser abrollen kann. Ein weiteres Beispiel für einen Gleiter ist ein Bauteil mit einer in einer Schnittebene senkrecht zur Auszugrichtung betrachteten polygonalen Querschnittsfläche. Beispielsweise kann der Gleiter V-förmig angeordnete Gleitflächen aufweisen, die im montierten Zustand in Kontakt mit der Lauffläche des Schienenelements sind.

In einer Ausführungsform der Erfindung ist auch der zweite Gleiter des Paars in der Hochrichtung senkrecht zu der Auszugsrichtung beweglich gegenüber dem Grundkörper an dem Grundkörper gelagert. Ein Federelement spannt dann auch den zweiten Gleiter von dem ersten Gleiter weg und im eingebauten Zustand auf eine der Laufflächen des Schienenelements hin vor.

In einer Ausführungsform der Erfindung bilden der erste Gleiter und der zweite Gleiter eine funktionale Einheit, da genau ein Federelement die ersten und zweiten Gleiter voneinander weg und damit auf die beiden Laufflächen des Schienenelements hin vorspannt. Auf diese Weise wird eine definierte Reibkraft zwischen dem Schlitten, nämlich den Gleitflächen der ersten und zweiten Gleiter und den Laufflächen des Schienenelements, bereitgestellt.

In einer Ausführungsform der Erfindung sind der erste und der zweite Gleiter sowie das Federelement in der Hochrichtung schwimmend an dem Grundkörper gelagert. Dies bedeutet, dass das Federelement, vorzugsweise das genau eine Federelement, sich in der Hochrichtung ausschließlich am ersten und am zweiten Gleiter abstützt, nicht aber an dem Grundkörper des Schlittens. Auf diese Weise ist die Federkraft, welche auf die beiden Gleiter ausgeübt wird, unabhängig von der exakten Position des Grundkörpers in der Hochrichtung. Insbesondere ist in einer Ausführungsform die auf die beiden Gleiter ausgeübte Federkraft gleich groß.

In einer Ausführungsform der Erfindung sind der erste Gleiter und der zweite Gleiter jeweils mit einem eigenen Federelement auf die jeweilige Lauffläche hin vorgespannt. In einer solchen Ausführungsform stützen sich die Federelemente an dem Grundkörper oder aneinander ab. In einer Ausführungsform der Erfindung ist das Federelement eine Spiralfeder.

In einer Ausführungsform der Erfindung sind der erste und/oder der zweite Gleiter aus Kunststoff, vorzugsweise durch Spritzgießen, hergestellt. In einer Ausführungsform der Erfindung ist der Grundkörper aus Metall oder aus Kunststoff, vorzugsweise durch Spritzgießen, hergestellt.

In einer Ausführungsform der Erfindung ist die Gleitfläche ein Teil einer Zylinderoberfläche.

Es versteht sich, dass in einer Ausführungsform der Erfindung der erste und der zweite Gleiter identisch ausgestaltet sind. Wenn in der vorliegenden Anmeldung Ausgestaltungen und Ausführungsformen des ersten Gleiters im Detail beschrieben werden, so beschreiben diese daher auch Ausführungsformen des zweiten Gleiters.

In einer Ausführungsform der Erfindung weist die Friktionsbacke - gegebenenfalls abgesehen von einem oder mehreren Führungsstiften - eine T-förmige Ausgestaltung auf. Dabei trägt der Querbalken der T-Form die Gleitfläche. Der vertikale Balken der T-Form hingegen dient der Aufnahme des Federelements. Handelt es sich bei dem Federelement um eine Spiralfeder, so erstreckt sich der vertikale Balken der T-Form in einer Ausführungsform in das Innere der Spiralfeder hinein.

Im Folgenden werden Ausführungsformen der erfindungsgemäßen Spielreduzierungseinrichtung beschrieben. Es versteht sich, dass in einer Ausführungsform der Erfindung an dem Grundkörper und/oder dem ersten Gleiter und/oder an dem zweiten Gleiter eine Mehrzahl von Spielreduzierungseinrichtungen vorgesehen sein kann. Insbesondere ist in einer Ausführungsform der Erfindung an dem zweiten Gleiter ebenfalls eine Spielreduzierungseinrichtung oder ein Teil davon vorgesehen.

In einer Ausführungsform der Erfindung umfasst die Spielreduzierungseinrichtung für jeden der ersten und/oder zweiten Gleiter zwei Führungsschlitze an dem Grundkörper, wobei jeder Führungsschlitz zwei, sich vorzugsweise parallel zu der Auszugsrichtung erstreckende, Kontaktflächen aufweist, die in Reibkontakt mit den Seitenflächen bzw. Abschnitten der Seitenflächen der Friktionsbacke sind.

In einer Ausführungsform der Erfindung ist eine der Kontaktflächen der zwei Führungsschlitze mit einer der Seitenflächen der Friktionsbacke über eine Führungslänge in Kontakt, wobei die Führungslänge mindestens 20 Prozent einer Gesamtlänge der Friktionsbacke in der Auszugsrichtung beträgt.

In einer Ausführungsform der Erfindung haben die Führungsrippe und die zwei Schienenrippen in einer Schnittebene senkrecht zu der Hochrichtung im Wesentlichen rechteckige, beispielsweise quadratische, Querschnittsflächen. Zwei Seitenflächen der Führungsrippe sind dann mit zwei zueinander hin zeigenden Seitenflächen der Schienenrippen in flächigem Kontakt und die Führungsrippe gleitet zwischen den Schienenrippen in der Hochrichtung.

In einer alternativen Ausführungsform haben die Führungsrippe und die zwei Schienenrippen jeweils eine in der Schnittebene senkrecht zu der Hochrichtung teilkreisförmige Querschnittsfläche. In einer Ausführungsform der Erfindung sind die Radien der teilkreisförmigen Querschnitte der Führungsrippe und der zwei Schienenrippen so aufeinander abgestimmt, dass sich die Führungsrippe und jede der zwei Schienenrippen nur tangential berühren. Dann wird ein im Wesentlichen linienförmiger Kontakt zwischen einer Oberfläche der Führungsschiene und jeder der Oberflächen der zwei Schienenrippen ausgebildet.

In einer Ausführungsform sind auf jeder Seite der Friktionsbacke zwei Schienenrippen und eine Führungsrippe vorgesehen.

In einer Ausführungsform der Erfindung weist der erste und/oder zweite Gleiter eine länglich ausgedehnte, sich in der Auszugsrichtung erstreckende Friktionsbacke und mindestens einen sich von der Friktionsbacke ausgehend in der Hochrichtung erstreckenden Führungsstift auf, wobei der Führungsstift in eine zu dem Führungsstift komplementäre Führungsbuchse in dem Grundkörper eingreift, sodass der erste Gleiter in der Hochrichtung gegenüber dem Grundkörper beweglich gelagert ist.

In einer Ausführungsform der Erfindung ist der Führungsstift zylindrisch und weist eine kreisförmige Querschnittsfläche auf. In einer Ausführungsform ist die Führungsbuchse mit dem Führungsstift komplementär als Hohlzylinder ausgestaltet. Auch andere Querschnittsformen des Führungsstifts und der Führungsbuchse sind denkbar, solange Führungsstift und Führungsbuchse zueinander komplementär sind.

In einer Ausführungsform der Erfindung weist der erste Gleiter zwei, vorzugsweise genau zwei, sich von der Friktionsbacke ausgehend in der Hochrichtung erstreckende Führungsstifte auf, wobei jeder der Führungsstifte in eine zu dem jeweiligen Führungsstift komplementäre Führungsbuchse in dem Grundkörper eingreift. In einer Ausführungsform der Erfindung sind die zwei Führungsstifte symmetrisch an der Friktionsbacke angeordnet.

In einer Ausführungsform ist die Spielreduzierungseinrichtung als ein Element zumindest an dem mindestens einen Führungsstift oder der Führungsbuchse ausgebildet.

In einer Ausführungsform ist das Element derart ausgestaltet, dass die Kombination aus dem Führungsstift und der Führungsbuchse entweder in der Auszugsrichtung ein geringeres Spiel aufweist als in einer zu der Auszugsrichtung und der Hochrichtung senkrechten Richtung oder in der zu der Auszugsrichtung und der Hochrichtung senkrechten Richtung ein geringeres Spiel aufweist als in der Auszugsrichtung. Ist das Spiel zwischen Führungsstift und Führungsbuchse in der Auszugsrichtung geringer als in der zu der Auszugsrichtung und der Hochrichtung senkrechten Richtung, so ist eine Drehbewegung um eine zu der Hochrichtung und der Auszugsrichtung senkrechte Drehachse blockiert. Ist das Spiel zwischen dem Führungsstift und der Führungsbuchse in der zu der Auszugsrichtung und der Hochrichtung senkrechten Richtung geringer als in der Auszugsrichtung, so ist eine Drehbewegung des Grundkörpers relativ zu dem Gleiter um eine Drehachse parallel zu der Hochrichtung blockiert.

Eine solche Verringerung des Spiels kann beispielsweise durch Verringerung des freien Querschnitts der Führungsbuchse in einer der beiden Richtungen verglichen mit der anderen Richtung bewirkt werden. Das Element der Spielreduzierungseinrichtung ist in einer solchen Ausführungsform ein Wandabschnitt der Führungsbuchse. Beispielsweise ist es möglich, die Führungsbuchse als Langloch auszugestalten. Eine Variante, bei welcher das Spiel zwischen Führungsstift und Führungsbuchse nur in einer der beiden Richtungen reduziert ist, blockiert gezielt eine Drehbewegung des Grundkörpers relativ zu dem Gleiter um eine der beiden Richtungen bzw. Achsen, während sie gleichzeitig die Reibung zwischen dem Führungsstift und der Führungsbuchse nicht übermäßig erhöht.

In einer Ausführungsform der Erfindung ist das Element der Spielreduzierungseinrichtung ein auf einer Oberfläche des Führungsstifts oder einer Oberfläche der Führungsbuchse angeordneter, gegenüber der Oberfläche vorspringender und sich in der Hochrichtung erstreckender Quetschsteg, der das Spiel zwischen dem Führungsstift und der Führungsbuchse reduziert. Insbesondere ist eine Ausführungsform bevorzugt, bei welcher die Oberfläche abgesehen von dem Quetschsteg sowohl des Führungsstifts als auch der Führungsbuchse zylindrisch bzw. hohlzylindrisch ist. Ein Quetschsteg im Sinne der vorliegenden Erfindung erstreckt sich in der Hochrichtung und springt von der jeweiligen Oberfläche des Führungsstifts oder der Führungsbuchse in radialer Richtung hervor. In einer Ausführungsform weist der Quetschsteg ein Übermaß in dem Sinne auf, dass der Quetschsteg größer ist als der Spalt zwischen Führungsstift und Führungsbuchse ohne den Quetschsteg.

Ein solcher Quetschsteg ist in einer Ausführungsform der Erfindung elastisch verformbar. Auf diese Weise wird eine Reduzierung des Spiels bewirkt ohne gleichzeitig die Reibung übermäßig zu erhöhen.

In einer Ausführungsform der Erfindung umfasst das Element der Spielreduzierungseinrichtung zwei, vorzugsweise genau zwei, auf der Oberfläche des Führungsstifts oder der Führungsbuchse angeordnete, gegenüber der Oberfläche vorspringende und sich in der Hochrichtung erstreckende Quetschstege, wobei vorzugsweise die Quetschstege auf der Oberfläche einander diametral gegenüberliegend angeordnet sind.

In einer Ausführungsform der Erfindung ist zudem die Führung zwischen Führungsstift und Führungsbuchse in der Hochrichtung maximiert. In einer Ausführungsform der Erfindung erstreckt sich der Führungsstift über eine Führungslänge in der Hochrichtung in der Führungsbuchse, wobei die Führungslänge mindestens 15 Prozent der Ausdehnung des Grundkörpers in der Hochrichtung beträgt. Dabei wird als Führungslänge der Überlapp zwischen Führungsstift und Führungsbuchse im vollständig in die Führungsbuchse eingeschobenen Zustand des Führungsstifts bezeichnet.

In einer Ausführungsform der Erfindung weisen zumindest der Grundkörper oder der erste Gleiter zwei Spielreduzierungseinrichtungen auf, wobei die zwei Spielreduzierungseinrichtungen in der Auszugsrichtung einen Abstand voneinander aufweisen, wobei der Abstand mindestens 50 Prozent, vorzugsweise mindestens 60 Prozent einer Gesamterstreckung der Friktionsbacke in der Auszugsrichtung beträgt. Es hat sich gezeigt, dass ein möglichst großer Abstand zweier Spielreduzierungseinrichtungen, insbesondere dann wenn die beiden Spielreduzierungseinrichtungen eine Drehbewegung um die gleiche Drehachse blockieren, zu einer erhöhten Stabilität des Grundkörpers gegenüber einwirkenden Drehmomenten führt.

In einer Ausführungsform der Erfindung beträgt eine Erstreckung der Friktionsbacke in der Auszugsrichtung mindestens 35 Prozent, vorzugsweise mindestens 40 Prozent und besonderes bevorzugt mindestens 50 Prozent einer Gesamterstreckung des Grundkörpers in der Auszugsrichtung. Es hat sich gezeigt, dass eine Maximierung der Erstreckung der Friktionsbacke in der Auszugsrichtung bezogen auf die Gesamterstreckung des Grundkörpers in der Auszugsrichtung zu einer Stabilisierung von Drehbewegungen des Grundkörpers relativ zu dem Gleiter beiträgt.

Zusätzlich zu dem ersten und dem zweiten Gleiter des Paars von Gleitern sind in einer Ausführungsform der Erfindung Stützelemente an dem Grundkörper aufgenommen. Diese Stützelemente sind in einer Ausführungsform wie der erste und der zweite Gleiter voneinander weg, d.h. im verbauten Zustand auf die Laufflächen des Schienenelements hin, vorgespannt. Solche Stützelemente können beispielsweise weitere Gleiter sein oder auch Wälzkörper, beispielsweise Kugeln.

Daher weist der Schlitten in einer Ausführungsform eine Mehrzahl von Wälzkörpern auf, wobei die Mehrzahl von Wälzkörpern derart an dem Grundkörper aufgenommen ist, dass die Mehrzahl von Wälzkörpern zumindest auf den zwei Laufflächen abrollbar sind oder gegenüber den zwei Laufflächen eine Gleitbewegung ausführen und dass die Mehrzahl von Wälzkörpern in der Auszugsrichtung von dem ersten Gleiter oder dem zweiten Gleiter beabstandet ist, wobei der Grundkörper eine Position eines jeden aus der Mehrzahl von Wälzkörpern in der Auszugsrichtung relativ zu dem Grundkörper festlegt. Wie oben ausgeführt, sind die Wälzkörper in einer Ausführungsform voneinander weg, d.h. auf die Laufflächen des Schienenelements hin, vorgespannt. Die Wälzkörper sind im Sprachgebrauch der vorliegenden Anmeldung Stützelemente.

In einer alternativen Ausführungsform der Erfindung sind die Stützelemente ebenfalls Gleiter. Dabei weisen in einer Ausführungsform der Erfindung die Gleiter der Stützelemente eine identische Ausgestaltung auf, wie der erste und/oder der zweite Gleiter.

In einer Ausführungsform der Erfindung weist der Schlitten ein erstes Paar von Stützelementen und ein zweites Paar, vorzugsweise genau ein erstes Paar und genau ein zweites Paar, von Stützelementen auf. Dabei sind die Stützelemente eines Paars mit den gegenüberliegenden Laufflächen des Schienenelements in Kontakt. In einer Ausführungsform der Erfindung haben die Stützelemente des ersten und des zweiten Paars von Stützelementen den gleichen Abstand in der Auszugsrichtung von dem ersten Gleiter bzw. dem zweiten Gleiter. dann sind die ersten und zweiten Gleiter symmetrisch zwischen zwei Stützelemente, vorzugsweise zwischen zwei Wälzkörpern, angeordnet.

In einer Ausführungsform der Erfindung sind an dem Schlitten zusätzlich ein Rastkörper und eine Rastfeder vorgesehen, wobei die Rastfeder den Rastkörper in eine Richtung senkrecht zu der Auszugsrichtung und in der Hochrichtung oder senkrecht zu der Hochrichtung vorspannt. Ein solcher Rastkörper kommt mit einer Rastvertiefung oder einer Rastrampe, die in dem Schienenelement ausgebildet ist, in Eingriff. Ein Rastkörper ermöglicht eine diskrete Positionierung bzw. Verrastung des Schlittens gegenüber dem Schienenelement.

Die oben genannte Aufgabe wird auch durch ein lineares Führungssystem gelöst, das ein Schienenelement mit zwei zueinander hin zeigenden Laufflächen und einen Schlitten gemäß einer der Ausführungsformen, so wie sie zuvor beschrieben wurden, aufweist, wobei der Schlitten und das Schienenelement in und entgegen der Auszugsrichtung linear gegeneinander verschiebbar sind, und wobei der erste und der zweite Gleiter mit jeweils einer der Laufflächen in Reibeingriff sind.

In einer Ausführungsform der Erfindung ist das lineare Führungssystem ausgewählt aus einer Gruppe bestehend aus einer Auszugsführung, einer Teleskopschiene und einer Linearführung. Wenn im Sinne der vorliegenden Anmeldung von einem linearen Führungssystem die Rede ist, so ist dieser Begriff derart allgemein zu verstehen, dass nicht nur Linearführungen davon umfasst sind, bei welchen der Schlitten deutlich kürzer ist als das Schienenelement und sich der Schlitten nur innerhalb der Länge des Schienenelements bewegen lässt, sondern auch Linearführungen, bei welchen der Grundkörper des Schlittens so lang ist, das er bei Erreichen zumindest einer Endlage über die Länge des Schienenelements übersteht und somit einen Teilauszug bildet.

Das erfindungsgemäße lineare Führungssystem selbst wiederum ist in einer Ausführungsform Bestandteil einer komplexeren linearen Führung. Dabei ist in einer Ausführungsform der Schlitten des linearen Führungssystems mit einem weiteren ersten Schienenelement einer Teleskopschiene verbunden, sodass der Schlitten gegenüber dem weiteren ersten Schienenelement keine Relativbewegung ausführen kann. Die Teleskopschiene weist in einer solchen Ausführungsform auch ein weiteres zweites Schienenelement auf, das relativ zu dem weiteren ersten Schienenelement verschieblich an dem weiteren ersten Schienenelement gelagert ist.

In einer Ausführungsform der Erfindung ist das Schienenelement zumindest abschnittsweise aus Metall, insbesondere aus Stahl oder Aluminium, oder aus Kunststoff hergestellt.

In einer Ausführungsform der Erfindung, bei der der Schlitten zusätzlich zu den ersten und zweiten Gleitern einen Rastkörper und eine Rastfeder aufweist, weist das Schienenelement, vorzugsweise in einer der beiden Laufflächen, eine Rastvertiefung auf, wobei die Rastvertiefung derart angeordnet ist, dass der Rastkörper in der Rastvertiefung verrastbar ist.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine Seitenansicht eines erfindungsgemäßen linearen Führungssystems.
- Figur 2: ist eine teilweise transparente Seitenansicht des montierten linearen Führungssystems aus Figur 1 mit daran aufgenommener Last.
- Figur 3: ist eine teilweise weggebrochene isometrische Darstellung eines Schlittens für das lineare Führungssystem aus den Figuren 1 und 2.
- Figur 4: ist eine teilweise weggebrochene isometrische Darstellung einer weiteren Ausführungsform eines Schlittens für das lineare Führungssystem aus den Figuren 1 und 2.
- Figur 5: ist eine Schnittdarstellung von oben des Schlittens aus Figur 4.
- Figur 6: ist eine vergrößerte und teilweise weggebrochene isometrische Darstellung einer weiteren Ausführungsform des Grundkörpers des Schlittens.
- Figur 7: ist eine teilweise weggebrochene seitliche Schnittansicht einer alternativen Ausführungsform des Schlittens.

Alle in den Figuren dargestellten Schlitten 1 dienen der Realisierung einer Linearbewegung entlang eines linearen bzw. geraden Wegs in einem Schienenelement 2. Der jeweilige Schlitten 1 bildet zusammen mit dem Schienenelement 2 ein lineares Führungssystem in Form einer Linearführung 3.

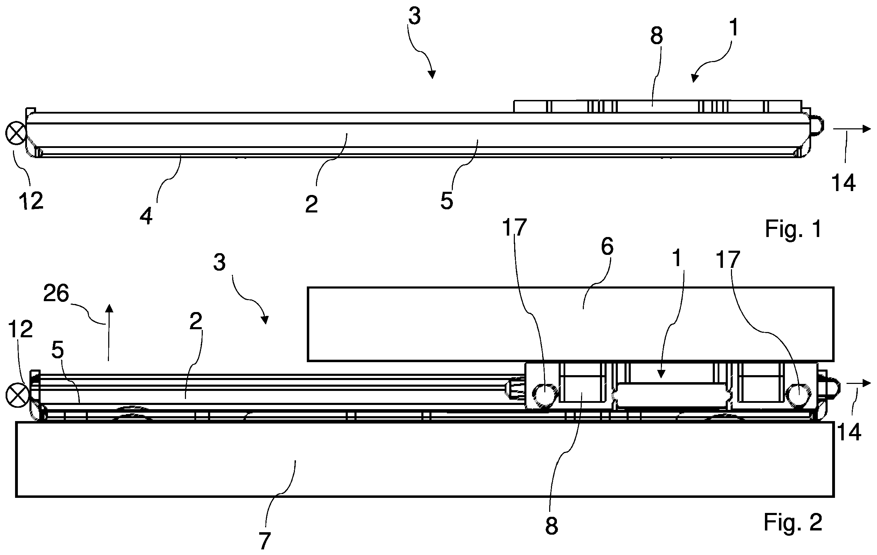

Eine solche Linearführung 3 ist in den Seitenansichten der Figuren 1 und 2 dargestellt. Dabei kann jeder der Schlitten 1 in den nachstehend beschriebenen Ausführungsformen Teil der Linearführung 3 sein.

Ein solches Schienenelement 2 einer Linearführung 3 weist im Allgemeinen einen Schienenrücken 4 auf, welcher zwei einander gegenüber angeordnete Schenkel 5 miteinander verbindet. Die Schenkel 5 tragen die Laufflächen (in den Figuren nicht sichtbar) des Schienenelements 2. Die Schenkel 5 des Schienenelements 2 sind teilkreisförmig gebogen, sodass insgesamt ein in etwa C-förmiges Profil entsteht. Der Schlitten 1 wird innerhalb des C-förmigen Profils des Schienenelements 2 aufgenommen, wobei sich der Schlitten 1 dort mit den nachstehend detaillierter beschriebenen Gleitern und Stützelementen abstützt und so von den Laufflächen des Schienenelements 2 geführt wird.

Die Schlitten 1 sind für eine Linearbewegung in und entgegen einer Auszugsrichtung 14 an dem jeweiligen Schienenelement 2 vorgesehen. Die Richtung senkrecht zu der Auszugsrichtung 14 und im Wesentlichen parallel zum Schienenrücken 4 des Schienenelements 2 bzw. parallel zu der in den Figuren dargestellten Oberfläche 20 des Grundkörpers 8 wird als Hochrichtung 12 des Schlittens 1 bzw. des Schienenelements 2 oder der Linearführung 3 als Ganzes bezeichnet.

Jeder Schlitten 1 verfügt über einen Grundkörper 8, der als Träger für ein mobiles Bauteil 6, das an dem Grundkörper 8 befestigt wird, dient. Ein solches mobiles Bauteil 6 ist beispielsweise eine Schublade, die gegenüber einem stationären Bauteil 7, an dem das Schienenelement angeschraubt ist, eine lineare Auszugsbewegung erfahren soll. Zu diesem Zweck weist der Grundkörper 8 des Schlittens 1 Befestigungsmittel, beispielsweise Innengewinde, die mit Schrauben verbindbar sind, auf.

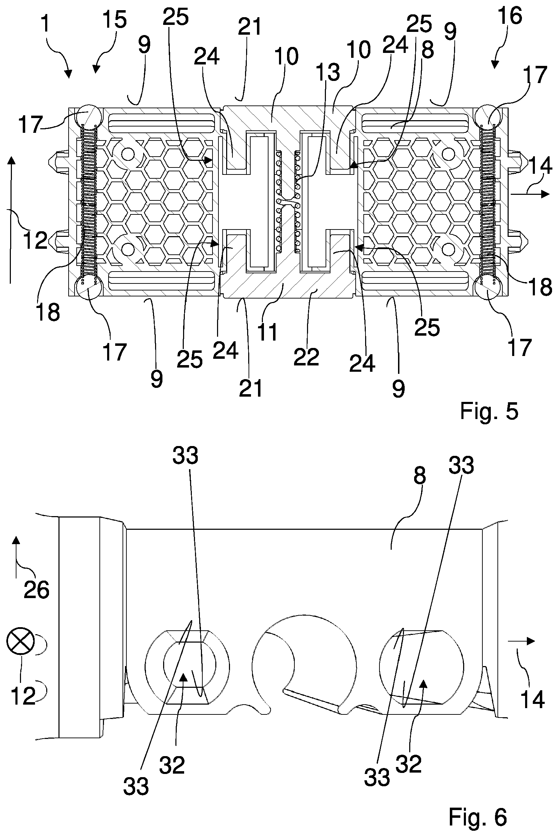

Der allgemeine Aufbau des Schlittens 1 ist beispielhaft gut der Schnittansicht aus Figur 5 zu entnehmen. Der Grundkörper 8 des Schlittens 1 weist in jeder Ausführungsform konvex gekrümmte Führungsflächen 9 auf. Diese Führungsflächen 9 sind im Wesentlichen komplementär zu den Laufflächen des jeweiligen Schienenelements 2. Die Führungsflächen 9 zeigen auf den beiden Seitenflächen des jeweiligen Schlittens 1 voneinander weg. Die Führungsflächen 9 des Grundkörpers 8 dienen jedoch nur als Notlaufflächen für den Fall, dass die übrigen für die Führung des jeweiligen Schlittens 1 an dem Grundkörper 8 vorgesehenen Elemente über ein vorgesehenes Maß hinaus belastet werden. Daher weisen die Führungsflächen 9 des Schlittens 8 im eingebauten Zustand des Schlittens 8 ein vergleichsweise großes Spiel gegenüber den Laufflächen des jeweiligen Schienenelements 2 auf.

Die eigentliche Führung der Schlitten 1 wird von einem ersten Gleiter 10 und einem zweiten Gleiter 11 bereitgestellt. Die Gleiter 10, 11 sind paarweise angeordnet und in der Hochrichtung 12 beweglich an dem Grundkörper 8 gelagert. Der erste und der zweite Gleiter 10, 11 sind bezogen auf die Auszugsrichtung 14 in der Mitte des Grundkörpers 8 und symmetrisch an dem Grundkörper 8 angeordnet.

Wie aus Figur 5 erkennbar ist, sind der erste und der zweite Gleiter 10, 11 in der Hochrichtung 12 schwimmend an dem Grundkörper gelagert. D.h. die Gleiter 10, 11 können sich in der Hochrichtung 12 frei gegenüber dem Grundkörper 8 bewegen. Dabei sind die beiden Gleiter 10, 11 mit einer einzigen Spiralfeder 13 voneinander weg und auf die Laufflächen des Schienenelements 2 hin vorgespannt. Auch die Spiralfeder 13 ist schwimmend an dem Grundkörper 2 gelagert und stützt sich ausschließlich auf entsprechenden Lagerflächen an dem ersten und dem zweiten Gleiter 10, 11 ab.

An dem Schlitten 1 sind in allen Ausführungsformen zwei Paare 15, 16 von Stützelementen vorgesehen. In den dargestellten Ausführungsformen werden diese Stützelemente von Wälzkörpern in Form von Lagerkugeln 17 gebildet. Die Lagerkugeln 17 sind in der Auszugsrichtung 14 symmetrisch vor und hinter den ersten und zweiten Gleitern 10, 11 angeordnet. Die Lagerkugeln 17 sind jeweils mittels einer an dem Grundkörper 8 aufgenommenen Spiralfeder 18 voneinander weg und auf die Laufflächen des Schienenelements 2 hin vorgespannt. Diese vorgespannten Lagerkugeln 17 können zusätzlich zu den ersten und zweiten Gleitern 10, 11 auf den Grundkörper 8 einwirkende Kräfte und Momente aufnehmen und diese über die Spiralfeder 18 abtragen. Dazu sind die Spiralfedern 18 der beiden Paare 15, 16 von Stützelementen nicht schwimmend in dem Grundkörper 8 verlegt, sondern weisen eine hohe Reibkraft gegenüber dem Grundkörper 8 auf. Daher überträgt der Grundkörper 8 die auf ihn einwirkenden Kräfte und Momente über die jeweilige Spiralfeder 18 auf die Kugeln 17. Auf diese Weise dienen die Kugeln 17 und ihre Federelemente 18 der Stützung des Grundkörpers 8 in dem Schienenelement 2. Die Kugelaufnahmen 19 der Lagerkugeln 17 sind derart ausgestaltet, dass die Kugeln einen definierten Federweg in der Hochrichtung 12 beim Einfedern entgegen der Federkraft der Spiralfedern 18 haben. Diese Begrenzung des Federwegs aufgrund der Ausgestaltung der Kugelaufnahmen 19 in dem Grundkörper 8 verhindert eine übermäßige Bewegung des Grundkörpers 8 gegenüber dem Schienenelement 2.

Alternativ können die Lagerkugeln 17 vorgesehen sein ohne eine federnde Vorspannung auf die Laufflächen des Schienenelements 2. Aufgrund der erfindungsgemäßen Spielreduzierungseinrichtungen, welche Drehbewegungen des Grundkörpers 8 relativ zu dem ersten und dem zweiten Gleiter 10, 11 blockieren, können die zusätzlichen Stützelemente in Form von Lagerkugeln 17 in Ausführungsformen aber auch vollständig entfallen.

Jeder der ersten und zweiten Gleiter 10, 11 weist eine Friktionsbacke 22 mit einer im wesentlichen teilzylindrische Gleitfläche 21 auf, die mit den Laufflächen des jeweiligen Schienenelements 2 in Reibeingriff ist. Die ersten und zweiten Gleiter 10, 11 können sowohl aufgrund der geometrischen Ausgestaltung ihrer Gleitflächen 21 (diese haben eine zu den Laufflächen des Schienenelements 2 komplementäre Form) als auch aufgrund ihrer Montage und Befestigung an dem Grundkörper 8 ausschließlich eine Gleitbewegung entlang der Laufflächen des Schienenelements 2 ausführen. Eine Rollbewegung oder eine kombinierte Roll-/Gleitbewegung ist ausgeschlossen. Die Friktionsbacke 22 umfasst neben der Gleitfläche 21 zwei zueinander parallele und parallel zu der Auszugsrichtung verlaufende Seitenflächen 23 sowie zwei zueinander und zu der Hochrichtung 12 parallel verlaufende Stirnflächen 37. Zusätzlich zu der Friktionsbacke 22 umfassen der erste Gleiter bzw. der zweite Gleiter 10, 11 zwei sich in der Hochrichtung 12 erstreckende Führungsstifte 24. Diese Führungsstifte 24 sind zu den Führungsstiften 24 komplementären Führungsbuchsen 25 in dem Grundkörper 8 geführt. Abgesehen von den Führungsstiften 24 weist jeder der Gleiter 10, 11 eine T-förmige Grundform auf, wobei der Querbalken des Zeichen "T" die Friktionsbacke 22 bildet, während der senkrechte Teil des "T" in die Spiralfeder 13 eingreift und diese führt.

Die ersten und zweiten Gleiter 10, 11 sind in der Hochrichtung 12 frei beweglich gegenüber dem Grundkörper 8 gelagert. Es hat sich herausgestellt, dass die beiden federnd auf die Laufflächen des Schienenelements 2 vorgespannten ersten und zweiten Gleiter 10, 11 trotz der in den Führungsbuchsen 25 laufenden Führungsstifte 24 nicht in allen Fällen eine hinreichende Stabilität für die Führung des Grundkörpers 8 des Schlittens 1 bieten. Ein herkömmlicher Schlitten 1 hat insbesondere bei größerer Dimensionierung häufig ein Spiel, das sich für einen Benutzer haptisch und akustisch auswirkt.

Figur 2 zeigt schematisch den horizontalen Einbau einer Ausführungsform einer Linearführung 3 zwischen dem feststehenden Bauteil 7 und dem beweglichen Bauteil 6. In dieser horizontalen Einbaulage verläuft der Schienenrücken 4 des Schienenelements 2 im Wesentlichen horizontal. Gleiches gilt für die Hochrichtung 12. Es versteht sich, dass in einer solchen Einbaulage der Schlitten 2 primär Drehmomente um eine Drehachse parallel zur Hochrichtung 12 abtragen und in das Schienenelement einleiten muss. Jedes Spiel des Schlittens 1 gegenüber dem Schienenelement 2, welches zu einer Drehbewegung um eine Drehachse parallel zur Hochrichtung 12 führt, resultiert in einem möglicherweise für einen Benutzer wahrnehmbaren Kippen des mobilen Bauteils 6. Daher gilt es bei einer horizontalen Einbaulage primär Drehbewegungen um eine zu der Hochrichtung parallelen Drehachse zu blockieren.

Wird die Linearführung 3 hingegen vertikal eingebaut, sodass der Schienenrücken 4 im Wesentlichen vertikal ausgerichtet ist, so wird eine Drehbewegung des Schlittens 1 gegenüber dem Schienenelement 2 um eine zu der Hochrichtung 12 und zu der Auszugsrichtung 14 senkrechte Drehachse 26 zu als nachteilig wahrnehmbaren Verkippungen der Last in Form des mobilen Bauteils 6 führen.

Daher gilt es bei horizontaler Einbaulage primär eine Drehbewegung des Grundkörpers relativ zu dem Gleiter und damit relativ zu dem Schienenelement 2 um eine zu der Hochrichtung parallele Drehachse zu blockieren. Im Fall einer vertikalen Einbaulage gilt es primär eine Drehbewegung des Grundkörpers 8 relativ zu den ersten und zweiten Gleitern 10, 11 um eine zu der Hochrichtung 12 und der Auszugsrichtung 14 senkrechte Drehachse 26 zu blockieren.

Daher weisen die verschiedenen Ausführungsformen der vorliegenden Erfindung jeweils mindestens eine Spielreduzierungseinrichtung auf, um eine Drehbewegung um zumindest eine der genannten Drehachsen zu blockieren.

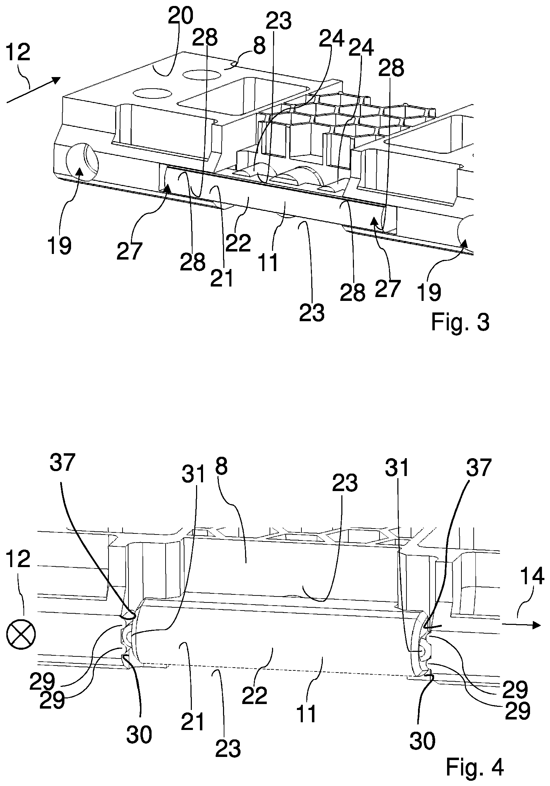

In der Ausführungsform aus Figur 3 umfasst die Spielreduzierungseinrichtung zwei Führungsschlitze 27 in dem Grundkörper 8. Jeder der Führungsschlitze 27 definiert zwei sich parallel zu der Auszugsrichtung 14 erstreckende Kontaktflächen 28. Diese Kontaktflächen 28 der Führungsschlitze 27 sind in Reibkontakt mit den Seitenflächen 23 der Friktionsbacke 22. Da die Friktionsbacke 22 in der Auszugsrichtung 14 länger ist als der Abstand der beiden Führungsstifte 24 des Gleiters 10, 11, reduziert die Spielreduzierungseinrichtung das Spiel, welches der jeweilige Gleiter 10, 11 gegenüber dem Grundkörper 8 hat, erheblich. Zudem sind die Kontaktflächen 28 der Schlitze im Grundkörper 8 so beschaffen, dass sie sich in der Auszugsrichtung über etwa 20 Prozent der Gesamtlänge der Friktionsbacke 22 in der Auszugsrichtung 14 erstrecken.

In der Ausführungsform des Schlittens der Figuren 4 und 5 umfasst die Spielreduzierungseinrichtung zwei sich in der Hochrichtung 12 erstreckende Schienenrippen auf jeder zu den Stirnflächen 37 der Friktionsbacke hin zeigenden Stützflächen 30 des Grundkörpers 8. Diese Schienenrippen 29 springen gegenüber den Stützflächen 30 in der Auszugsrichtung 14 vor. Die Schienenrippen 29 haben eine in einer Schnittebene senkrecht zu der Hochrichtung 12 teilkreisförmige Querschnittsfläche. Zusätzlich umfasst die Spielreduzierungseinrichtung in dieser Ausführungsform eine Führungsrippe 31 mit ebenfalls einer senkrecht zu der Hochrichtung 12 betrachtet teilkreisförmigen Querschnittsfläche. Die Führungsrippe 31 und die Schienenrippen sind so bemessen, dass Führungsrippe nur mit den Oberflächen der Schienenrippen 29 in Kontakt kommt, nicht aber mit der Stützfläche 30. Auf diese Weise bildet sich zwischen der Führungsrippe 31 an der Stirnfläche 37 der Friktionsbacke 22 und jeder Schienenrippe ein tangentialer, sich linienförmig in der Hochrichtung 12 erstreckender Kontakt aus. Dieser Kontakt ist hinreichend klein, um eine noch weitgehend reibungsarme Bewegung des Gleiters 10, 11 in der Hochrichtung 12 zu ermöglichen. Dennoch hält er den Gleiter 10, 11 in einer zu der Auszugsrichtung 14 und der Hochrichtung 12 senkrechten Richtung 26 spielfrei, sodass Drehmomente um eine Drehachse parallel zur Hochrichtung 12 zu keinem Verkippen des Grundkörpers 8 gegenüber dem Gleiter 10, 11 führen.

Auch die Ausführungsform aus Figur 6 zeigt eine Spielreduzierungseinrichtung zur spielfreien Aufnahme des Gleiters 10, 11 an dem Grundkörper 8 in der zu der Auszugsrichtung 14 und der Hochrichtung 12 senkrechten Richtung 26. Damit blockiert auch diese Ausführungsform Drehbewegungen des Grundkörpers 8 gegenüber dem Gleiter 10, 11 um eine zu der Hochrichtung 12 senkrechte Drehachse. Dazu ist die Spielreduzierungseinrichtung in dieser Ausführungsform in Form der geringer beabstandeten Grenzflächen 33 eines Langlochs 32 als Führungsbuchse für die Führungsstifte ausgestaltet. Während das Langloch in der zu der Auszugsrichtung 14 und der Hochrichtung 12 senkrechten Richtung 26 eine kleinere Abmessung aufweist, sodass der Führungsstift in dieser Richtung spielfrei in dem Langloch aufgenommen ist, weist der Führungsstift in der Auszugsrichtung 14 ein Spiel zu dem Langloch 32 auf.

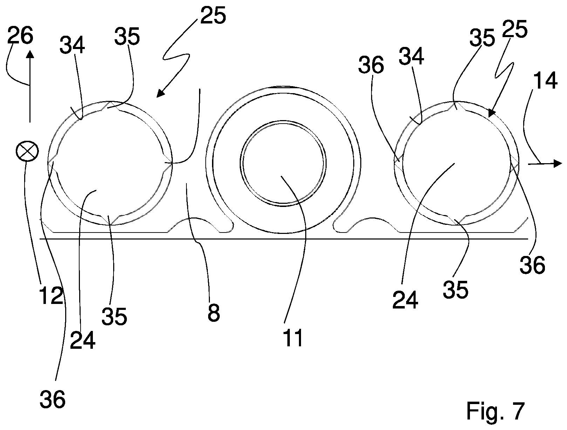

In der Ausführungsform der Figur 7 sind die Spielreduzierungseinrichtungen als auf einer Oberfläche 34 der Führungsstifte 24 angeordnete, gegenüber der Oberfläche 34 vorspringende und sich in der Hochrichtung 12 erstreckende Quetschstege 35, 36 ausgebildet, die das Spiel zwischen dem jeweiligen Führungsstift 24 und der Führungsbuchse 25 reduzieren. Die Quetschstege 35, 36 haben gegenüber dem Durchmesser der Führungsbuchse 25 ein minimales Übermaß und sind aufgrund ihrer gewählten Dimensionierung elastisch verformbar.

Figur 7 zeigt auf jedem Führungsstift 24 vier Quetschstege 35, 36 die paarweise einander diametral gegenüber angeordnet sind. Dabei verringern die mit dem Bezugszeichen 36 bezeichneten Quetschstege das Spiel zwischen Führungsstift 24 und Führungsbuchse 25 in der Auszugsrichtung 14. Die mit dem Bezugszeichen 35 bezeichneten Quetschstege hingegen verringern das Spiel zwischen Führungsstift 24 und Führungsbuchse 25 in der zu der Auszugsrichtung 14 und der Hochrichtung 12 senkrechten Richtung 26.

Während in der Figur 7 beispielhaft beide Paare von Quetschstegen dargestellt sind, wird man in Varianten davon immer nur ein paar von diametral gegenüberliegenden Quetschstegen vorsehen, so dass entweder eine Drehbewegung um eine zu der Hochrichtung 12 parallele Drehachse blockiert ist (dann sind nur die Quetschstege 35 realisiert) oder eine Drehbewegung um eine zu der Richtung 26 parallele Drehachse blockiert ist (dann sind nur die Quetschstege 36 realisiert). In diesen Varianten tritt keine erhöhte Reibung bei einer linearen Bewegung der Gleiter 10, 11 in der Hochrichtung auf.

Für Zwecke der ursprünglichen Offenbarung wird darauf hingewiesen, dass sämtliche Merkmale, wie sie sich aus der vorliegenden Beschreibung und den Zeichnungen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Die Erfindung ist durch die angehängten Ansprüche definiert. Auf die umfassende, explizite Darstellung sämtlicher denkbarer Merkmalskombinationen wird hier nur der Kürze und der Lesbarkeit der Beschreibung wegen verzichtet.

### Bezugszeichenliste

- 1: Schlitten
- 2: Schienenelement
- 3: Linearführung
- 4: Schienenrücken
- 5: Schenkel
- 6: mobiles Bauteil
- 7: stationäres Bauteil
- 8: Grundkörper
- 9: Führungsfläche
- 10: erster Gleiter
- 11: zweiter Gleiter
- 12: Hochrichtung
- 13: Spiralfeder
- 14: Auszugsrichtung
- 15, 16: Paar von Stützelementen
- 17: Lagerkugel
- 18: Spiralfeder
- 19: Kugelaufnahmen
- 20: Oberfläche des Grundkörpers
- 21: Gleitfläche
- 22: Friktionsbacke
- 23: Seitenflächen
- 24: Führungsstifte
- 25: Führungsbuchsen
- 26: Richtung senkrecht zur Hochrichtung 12 und zur Auszugsrichtung 14
- 27: Führungsschlitz
- 28: Kontaktflächen
- 29: Schienenrippe
- 30: Stützfläche
- 31: Führungsrippe
- 32: Langloch
- 33: Grenzfläche
- 34: Oberfläche des Führungsstifts
- 35, 36: Quetschsteg
- 37: Stirnfläche

## Patentansprüche

1. Schlitten (1) für ein lineares Führungssystem (3), das ein Schienenelement (2) mit zwei zueinander hin zeigenden Laufflächen und den relativ gegenüber dem Schienenelement (2) in und entgegen einer Auszugsrichtung (14) beweglichen Schlitten (1) umfasst, wobei der Schlitten (1) aufweist
einen Grundkörper (8),
ein Paar aus einem ersten und einem zweiten Gleiter (10, 11) mit voneinander weg zeigenden Gleitflächen (21),
wobei die Gleitfläche (21) des ersten und des zweiten Gleiters (10, 11) mit jeweils einer der Laufflächen in Reibeingriff bringbar ist und
wobei der erste Gleiter (10) in einer Hochrichtung (12) senkrecht zu der Auszugsrichtung (14) beweglich gegenüber dem Grundkörper (8) an dem Grundkörper (8) gelagert ist, und
ein Federelement (13),
wobei das Federelement (13) derart an dem Grundkörper (8) gelagert ist, dass das Federelement (13) den ersten Gleiter (10) in der Hochrichtung (12) von dem zweiten Gleiter (12) weg vorspannt,
wobei zumindest der Grundkörper (8) oder der erste Gleiter (10) eine Spielreduzierungseinrichtung (27, 28, 29, 31, 33, 25, 36) aufweist,
wobei die Spielreduzierungseinrichtung (27, 28, 29, 31, 33, 25, 36) derart ausgestaltet ist, dass der erste Gleiter (10) im Wesentlichen spielfrei an dem Grundkörper (8) gelagert ist, so dass zumindest
eine Drehbewegung des Grundkörpers (8) relativ zu dem ersten Gleiter (10) um eine zu der Hochrichtung (12) parallele Drehachse durch die Spielreduzierungseinrichtung (27, 28, 29, 31, 33, 25, 36) blockiert ist
oder
eine Drehbewegung des Grundkörpers (8) relativ zu dem ersten Gleiter (10) um eine zu der Hochrichtung (12) und der Auszugsrichtung (14) senkrechte Drehachse durch die Spielreduzierungseinrichtung (27, 28, 29, 31, 33, 25, 36) blockiert ist,
wobei der erste Gleiter (10) eine länglich ausgedehnte, sich in der Auszugsrichtung (14) erstreckende Friktionsbacke (22) umfasst und wobei die Friktionsbacke (22) zwei, sich vorzugsweise parallel zu der Auszugsrichtung (14) erstreckende, Seitenflächen (23), zwei sich, vorzugsweise parallel zu der Hochrichtung (12) erstreckende, Stirnflächen (37) und die Gleitfläche (21) aufweist,
**dadurch gekennzeichnet, dass**
die Spielreduzierungseinrichtung (27, 28, 29, 31, 33, 25, 36) zwei sich in der Hochrichtung (12) erstreckende Schienenrippen (29) und eine sich in der Hochrichtung (12) erstreckende Führungsrippe (31) aufweist,
wobei entweder die zwei Schienenrippen (29) auf einer der Stirnflächen (37) der Friktionsbacke (22) und die Führungsrippe (31) auf einer zu der Stirnfläche (37) hinzeigenden Stützfläche (30) des Grundkörpers (8) angeordnet sind oder die Führungsrippe (31) auf einer der Stirnflächen (37) der Friktionsbacke (22) und die zwei Schienenrippen (29) auf der zu der Stirnfläche (37) hinzeigenden Stützfläche (30) des Grundkörpers (8) angeordnet sind,
wobei die Führungsrippe (31) und die zwei Schienenrippen (29) parallel zueinander verlaufen und
wobei die Führungsrippe (31) mit den zwei Schienenrippen (29) in Kontakt ist.

2. Schlitten (1) nach dem vorhergehenden Anspruch, wobei die Spielreduzierungseinrichtung (27, 28, 29, 31, 33, 25, 36) zwei Führungsschlitze (27) an dem Grundkörper (8) aufweist, wobei jeder Führungsschlitz (27) zwei, sich vorzugsweise parallel zu der Auszugsrichtung (14) erstreckende, Kontaktflächen (28) aufweist, die in Reibkontakt mit den Seitenflächen (23) der Friktionsbacke (22) sind.

3. Schlitten (1) nach dem vorhergehenden Anspruch, wobei eine der Kontaktflächen (28) in der Auszugsrichtung (14) mit einer der Seitenflächen (23) der Friktionsbacke (22) über eine Führungslänge in Kontakt ist, wobei die Führungslänge mindestens 20 Prozent einer Gesamtlänge der Friktionsbacke (22) in der Auszugsrichtung (14) beträgt.

4. Schlitten (1) nach einem der vorhergehenden Ansprüche, wobei die Führungsrippe (31) und die zwei Schienenrippen (29) jeweils eine teilkreisförmige Querschnittsfläche aufweisen, so dass ein im Wesentlichen linienförmiger Kontakt zwischen einer Oberfläche der Führungssrippe (31) und jeder der Oberflächen der zwei Schienenrippen (29) ausgebildet ist.

5. Schlitten (1) nach einem der vorhergehenden Ansprüche, wobei der erste Gleiter (10) eine länglich ausgedehnte, sich in der Auszugsrichtung (14) erstreckende Friktionsbacke (22) und mindestens einen sich von der Friktionsbacke ausgehend in der Hochrichtung (12) erstreckenden Führungsstift (24) aufweist, wobei der Führungsstift (24) in eine zu dem Führungsstift (24) komplementäre Führungsbuchse (25) in dem Grundkörper (8) eingreift, so dass der erste Gleiter (8) in der Hochrichtung (12) gegenüber dem Grundkörper (8) beweglich gelagert ist.

6. Schlitten (1) nach dem vorhergehenden Anspruch, wobei die Spielreduzierungseinrichtung als ein Element zumindest an dem mindestens einen Führungsstift (24) oder der Führungsbuchse (25) ausgebildet ist und wobei das Element derart ausgestaltet ist, dass die Kombination aus dem Führungsstift (24) und der Führungsbuchse (25) entweder in der Auszugsrichtung (14) ein geringeres Spiel aufweist als in einer zu der Auszugsrichtung (14) und der Hochrichtung (12) senkrechten Richtung (26) oder in der zu der Auszugsrichtung (14) und der Hochrichtung (12) senkrechten Richtung (26) ein geringeres Spiel aufweist als in der Auszugsrichtung (14).

7. Schlitten (1) nach dem vorhergehenden Anspruch, wobei das Element ein auf einer Oberfläche (34) des Führungsstifts (24) oder der Führungsbuchse (25) angeordneter, gegenüber der Oberfläche (34) vorspringender und sich in der Hochrichtung (12) erstreckender Quetschsteg (35, 36)ist, der das Spiel zwischen dem Führungsstift (24) und der Führungsbuchse (25) reduziert.

8. Schlitten (1) nach dem vorhergehenden Anspruch, wobei das Element zwei, vorzugsweise genau zwei, auf der Oberfläche (34) des Führungsstifts (24) oder der Führungsbuchse (25) angeordnete, gegenüber der Oberfläche (34) vorspringende und sich in der Hochrichtung erstreckende Quetschstege (35, 36) aufweist, wobei vorzugsweise die zwei Quetschstege (35, 36) auf der Oberfläche (34) einander diametral gegenüberliegend angeordnet sind.

9. Schlitten (1) nach Anspruch 7 oder 8, wobei der Quetschsteg (35, 36) elastisch verformbar ist.

10. Schlitten nach einem der vorhergehenden Ansprüche, wobei zumindest der Grundkörper (8) oder der erste Gleiter (10) zwei Spielreduzierungseinrichtungen (27, 28, 29, 31, 33, 25, 36) aufweisen, wobei die zwei Spielreduzierungseinrichtungen (27, 28, 29, 31, 33, 25, 36) in der Auszugsrichtung (14) einen Abstand voneinander aufweisen, wobei der Abstand mindestens 50 Prozent, vorzugsweise mindestens 60 Prozent einer Gesamterstreckung der Friktionsbacke (22) in der Auszugsrichtung (14) beträgt.

11. Schlitten (1) nach einem der vorhergehenden Ansprüche, wobei eine Erstreckung der Friktionsbacke (22) in der Auszugsrichtung (14) mindestens 35 Prozent, vorzugsweise mindestens 40 Prozent und besonders bevorzugt mindestens 50 Prozent einer Gesamterstreckung des Grundkörpers (8) in der Auszugsrichtung (14) beträgt.

12. Schlitten (1) nach einem der vorhergehenden Ansprüche, wobei der Schlitten (1) eine Mehrzahl von Wälzkörpern (17) aufweist,
wobei die Mehrzahl von Wälzkörpern (17) derart an dem Grundkörper (8) aufgenommenen ist, dass die Mehrzahl von Wälzkörpern (17) zumindest auf den zwei Laufflächen abrollbar sind oder gegenüber den zwei Laufflächen eine Gleitbewegung ausführen und dass die Mehrzahl von Wälzkörpern (17) in der Auszugsrichtung (14) von dem ersten und dem zweiten Gleiter (10, 11) beabstandet ist, und
wobei der Grundkörper (2) eine Position eines jeden aus der Mehrzahl von Wälzkörpern (19) in der Auszugsrichtung (10) relativ zu dem Grundkörper (2) festlegt.

13. Lineares Führungssystem (3) mit
einem Schienenelement (2), das zwei zueinander hin zeigende Laufflächen aufweist, und
einem Schlitten (1) nach einem der vorhergehenden Ansprüche,
wobei der Schlitten (1) und das Schienenelement (2) in und entgegen der Auszugsrichtung (14) linear gegeneinander verschiebbar sind und
wobei der erste und der zweite Gleiter (10, 11) mit jeweils einer der Laufflächen in Reibeingriff sind.

## Claims

1. A carriage (1) for a linear guide system (3), which linear guide system comprises a rail element (2) comprising two running surfaces facing each other and the carriage (1) movable relative to the rail element (2) in and against a pull-out direction (14), wherein the carriage (1) comprises
a base body (8),
a pair of first and second sliders (10, 11) having sliding surfaces (21) facing away from each other,
wherein the sliding surface (21) of each of the first and second sliders (10, 11) is frictionally engageable with one of the running surfaces, and wherein the first slider (10) is mounted on the base body (8) so as to be movable in an upward direction (12) perpendicular to the pull-out direction (14) relative to the base body (8), and
a spring element (13),
wherein the spring element (13) is mounted on the base body (8) in such a way that the spring element (13) biases the first slider (10) in the upward direction (12) away from the second slider (12),
wherein at least the base body (8) or the first slider (10) has clearance reducing means (27, 28, 29, 31, 33, 25, 36),
wherein the clearance reducing means (27, 28, 29, 31, 33, 25, 36) is designed in such a way that the first slider (10) is mounted substantially free of clearance on the base body (8), so that at least
a rotational movement of the base body (8) relative to the first slider (10) about an axis of rotation parallel to the upward direction (12) is blocked by the clearance reducing means (27, 28, 29, 31, 33, 25, 36)
or
a rotational movement of the base body (8) relative to the first slider (10) about an axis of rotation perpendicular to the upward direction (12) and to the pull-out direction (14) is blocked by the clearance reducing means (27, 28, 29, 31, 33, 25, 36),
wherein the first slider (10) comprises an elongated friction jaw (22) extending in the pull-out direction (14), and wherein the friction jaw (22) comprises two side surfaces (23) extending preferably parallel to the pull-out direction (14), two end surfaces (37) extending preferably parallel to the upward direction (12), and the sliding surface (21),
**characterised in that**
the clearance reducing means (27, 28, 29, 31, 33, 25, 36) comprises two rail ribs (29) extending in the upward direction (12) and one guiding rib (31) extending in the upward direction (12),
wherein either the two rail ribs (29) are arranged on one of the end faces (37) of the friction jaw (22) and the guiding rib (31) is arranged on a supporting surface (30) of the base body (8) facing the end face (37), or the guiding rib (31) is arranged on one of the end faces (37) of the friction jaw (22) and the two rail ribs (29) are arranged on the supporting surface (30) of the base body (8) facing the end face (37),
wherein the guiding rib (31) and the two rail ribs (29) extend parallel to each other, and
wherein the guiding rib (31) is in contact with the two rail ribs (29).

2. The carriage (1) according to the preceding claim, wherein the clearance reducing means (27, 28, 29, 31, 33, 25, 36) comprises two guiding slots (27) on the base body (8), each guiding slot (27) comprising two contact surfaces (28) extending preferably parallel to the pull-out direction (14) and being in frictional contact with the side surfaces (23) of the friction jaw (22).

3. The carriage (1) according to the preceding claim, wherein one of the contact surfaces (28) in the pull-out direction (14) is in contact with one of the side surfaces (23) of the friction jaw (22) over a guiding length, wherein the guiding length is at least 20 percent of a total length of the friction jaw (22) in the pull-out direction (14).

4. The carriage (1) according to the preceding claim, wherein the guiding rib (31) and the two rail ribs (29) each have a part-circular cross-sectional area such that a substantially linear contact is formed between a surface of the guiding rib (31) and each of the surfaces of the two rail ribs (29).

5. The carriage (1) according to any one of the preceding claims, wherein the first slider (10) comprises an elongate friction jaw (22) extending in the pull-out direction (14) and at least one guiding pin (24) extending from the friction jaw in the upward direction (12), wherein the guiding pin (24) engages in a guiding bush (25) in the base body (8) which guiding bush (25) is complementary to the guiding pin (24), so that the first slider (8) is mounted movably in the upward direction (12) relative to the base body (8).

6. The carriage (1) according to the preceding claim, wherein the clearance reducing means is formed as an element at least on the at least one guiding pin (24) or on the guiding bush (25), and wherein the element is designed in such a way, that the combination of the guiding pin (24) and the guiding bush (25) either has a smaller clearance in the pull-out direction (14) than in a direction (26) perpendicular to the pull-out direction (14) and to the upward direction (12) or has a smaller clearance in the direction (26) perpendicular to the pull-out direction (14) and the upward direction (12) than in the pull-out direction (14).

7. The carriage (1) according to the preceding claim, wherein the element is a squeezing web (35, 36) arranged on a surface (34) of the guiding pin (24) or the guiding bush (25), projecting with respect to the surface (34) and extending in the upward direction (12), which reduces the clearance between the guiding pin (24) and the guiding bush (25).

8. The carriage (1) according to the preceding claim, wherein the element comprises two, preferably exactly two, squeezing webs (35, 36) arranged on the surface (34) of the guiding pin (24) or of the guiding bush (25), projecting with respect to the surface (34) and extending in the upward direction, wherein preferably the two squeezing webs (35, 36) are arranged diametrically opposite each other on the surface (34).

9. The carriage (1) according to claim 7 or 8, wherein the pinch bar (35, 36) is elastically deformable.

10. The carriage according to any one of the preceding claims, wherein at least the base body (8) or the first slider (10) comprises two clearance reducing means (27, 28, 29, 31, 33, 25, 36), wherein the two clearance reducing means (27, 28, 29, 31, 33, 25, 36) are spaced from each other in the pull-out direction (14), wherein the spacing is at least 50 percent, preferably at least 60 percent, of a total extension of the friction jaw (22) in the pull-out direction (14).

11. The carriage (1) according to any one of the preceding claims, wherein an extension of the friction jaw (22) in the pull-out direction (14) is at least 35 percent, preferably at least 40 percent and particularly preferred at least 50 percent of a total extension of the base body (8) in the pull-out direction (14).

12. The carriage (1) according to one of the preceding claims, wherein
the carriage (1) comprises a plurality of rolling bodies (17),
wherein the plurality of rolling bodies (17) is accommodated on the base body (8) in such a way that the plurality of rolling bodies (17) can roll at least on the two running surfaces or perform a sliding movement relative to the two running surfaces, and in such a way that the plurality of rolling bodies (17) is spaced apart from the first and the second slider (10, 11) in the pull-out direction (14), and
wherein the base body (2) determines a position of each of the plurality of rolling bodies (19) in the pull-out direction (10) relative to the base body (2).

13. A linear guide system (3) comprising
a rail element (2) having two running surfaces facing each other, and
a carriage (1) according to any one of the preceding claims,
wherein the carriage (1) and the rail element (2) are linearly displaceable relative to each other in and against the pull-out direction (14), and
wherein the first and second sliders (10, 11) are each frictionally engaged with one of the running surfaces.

## Revendications

1. Chariot (1) pour un système de guidage linéaire (3) qui comprend un élément rail (2) avec deux surfaces de roulement orientées l'une vers l'autre et le chariot (1) pouvant être déplacé par rapport à l'élément rail (2) dans une, et à l'encontre d'une, direction d'extraction (14), le chariot (1) comprenant
un corps de base (8),
une paire de surfaces de coulissement (21) constituée d'un premier et d'un deuxième élément coulissant (10, 11) étant orientées dans des sens opposés,
la surface de coulissement (21) du premier et du deuxième élément coulissant (10, 11) pouvant être mise en contact à friction avec une des surfaces de roulement respective et
le premier élément coulissant (10) étant monté mobile, sur le corps de base (8), en une direction verticale (12) perpendiculaire à la direction d'extraction (14) et
un élément ressort (13),
l'élément ressort (13) étant monté sur le corps de base (8) de façon que l'élément ressort (13) précontraigne le premier élément coulissant (10) dans la direction verticale (12) en éloignement du deuxième élément coulissant (11),
au moins le corps de base (8) ou le premier élément coulissant (10) comprenant un dispositif de réduction de jeu (27, 28, 29, 31, 33, 25, 36),
le dispositif de réduction de jeu (27, 28, 29, 31, 33, 25, 36) étant configuré de façon que le premier élément coulissant (10) soit monté essentiellement sans jeu sur le corps de base (8), si bien qu'au moins un
mouvement de rotation du corps de base (8) par rapport au premier élément coulissant (10) autour d'un axe de rotation parallèle à la direction verticale (12) soit bloqué par le dispositif de réduction de jeu (27, 28, 29, 31, 33, 25, 36),
le premier élément coulissant (10) comprenant un patin de friction (22) longitudinal s'étendant dans la direction d'extraction (14) et le patin de friction (22) comprenant deux faces latérales (23) s'étendant de préférence parallèlement à la direction d'extraction (14), deux faces frontales (37) s'étendant de préférence parallèlement à la direction verticale (12) et la surface de coulissement (21),
**caractérisé en ce que**
le dispositif de réduction de jeu (27, 28, 29, 31, 33, 25, 36) comprend deux nervures de rail (29) s'étendant dans la direction verticale (12) et une nervure de guidage (31) s'étendant dans la direction verticale (12),
soit les deux nervures de rail (29) étant disposées sur une des faces frontales (37) du patin de friction (22) et la nervure de guidage (31) étant disposée sur une surface support (30) du corps de base (8), orientée vers la face frontale (37), soit la nervure de guidage (31) étant disposée sur une des faces frontales (37) du patin de friction (22) et les deux nervures de rail (29) étant disposées sur la surface de support (30) du corps de base (8), orientée vers la face frontale (37),
la nervure de guidage (31) et les deux nervures de rail (29) s'étendant parallèlement l'une à l'autre et
la nervure de guidage (31) étant en contact avec les deux nervures de rail (29).

2. Chariot (1) selon la revendication précédente, le dispositif de réduction de jeu (27, 28, 29, 31, 33, 25, 36) comprenant deux fentes de guidage (27) sur le corps de base (8), chaque fente de guidage (27) comprenant deux surfaces de contact (28) s'étendant de préférence parallèlement à la direction d'extraction (14) qui sont en contact de friction avec les faces latérales (23) du patin de friction (22).

3. Chariot (1) selon la revendication précédente, une des surfaces de contact (28) étant en contact, sur une longueur de guidage, dans la direction d'extraction (14), avec une des faces latérales (23) du patin de friction (22), la longueur de guidage étant d'au moins 20 pourcents d'une longueur totale du patin de friction (22) dans la direction d'extraction (14).

4. Chariot (1) selon l'une des revendications précédentes, la nervure de guidage (31) et les deux nervures de rail (29) ayant chacune une section transversale en forme de cercle partiel, si bien qu'un contact essentiellement linéaire soit formé entre une surface de la nervure de guidage (31) et chacune des surfaces des deux nervures de rail (29).

5. Chariot (1) selon l'une des revendications précédentes, le premier élément coulissant (10) comprenant un patin de friction (22) s'étendant longitudinalement dans la direction d'extraction (14) et au moins une tige de guidage (24) s'étendant à partir du patin de friction et dans la direction verticale (12), la tige de guidage (24) s'engageant dans une douille de guidage (25) complémentaire à la tige de guidage (24) et située dans le corps de base (8), si bien que le premier élément coulissant (10) soit monté mobile, dans la direction verticale (12), par rapport au corps de base (8).

6. Chariot (1) selon la revendication précédente, le dispositif de réduction de jeu étant formé comme un élément sur au moins ladite au moins une tige de guidage (24) ou la douille de guidage (25) et l'élément étant configuré de façon que la combinaison de la tige de guidage (24) avec la douille de guidage (25) ait un jeu moins important, dans la direction d'extraction (14), que dans une direction verticale (26) perpendiculaire à la direction d'extraction (14) et à la direction verticale (12) ou ait un jeu moins important dans la direction verticale (26) perpendiculaire à la direction d'extraction (14) et à la direction verticale (12) que dans la direction d'extraction (14).

7. Chariot (1) selon la revendication précédente, l'élément étant une nervure par pincement (35, 36) proéminente disposée sur une surface (34) de la tige de guidage (24) ou de la douille de guidage (25) et en saillie par rapport à la surface (34) et s'étendant dans la direction verticale (12), qui réduit le jeu entre la tige de guidage (24) et la douille de guidage (25).

8. Chariot (1) selon la revendication précédente, l'élément comprenant deux, de préférence exactement deux, nervures par pincement (35, 36) proéminentes disposées sur la surface (34) de la tige de guidage (24) ou de la douille de guidage (25) et en saillie par rapport à la surface (34) et s'étendant dans la direction verticale (12), de préférence, les deux nervures par pincement (35, 36) étant disposées diamétralement opposées sur la surface (34).

9. Chariot (1) selon la revendication 7 ou 8, la nervure par pincement (35, 36) étant déformable élastiquement.

10. Chariot (1) selon l'une des revendications précédentes, au moins le corps de base (8) ou le premier élément coulissant (10) comprenant deux dispositifs de réduction de jeu (27, 28, 29, 31, 33, 25, 36), les deux dispositifs de réduction de jeu (27, 28, 29, 31, 33, 25, 36) étant espacés l'un de l'autre dans la direction d'extraction (14), l'espace étant d'au moins 50 pourcents, de préférence d'au moins 60 pourcents d'une étendue totale du patin de friction (22) dans la direction d'extraction (14).

11. Chariot (1) selon l'une des revendications précédentes, une étendue du patin de friction (22) dans la direction d'extraction (14) étant d'au moins 35 pourcents, de préférence d'au moins 40 pourcents et de façon particulièrement préférée d'au moins 50 pourcents d'une étendue totale du corps de base (8) dans la direction d'extraction (14).

12. Chariot (1) selon l'une des revendications précédentes, le chariot (1) comprenant une pluralité de corps roulants (17),
la pluralité de corps roulants (17) étant intégrée dans le corps de base (8) de façon que la pluralité de corps roulants (17) puisse rouler au moins sur les deux surfaces de roulement ou qu'elle effectue un mouvement de glissement par rapport aux deux surfaces de roulement et que la pluralité de corps roulants (17) soit espacée du premier élément coulissant et du deuxième élément coulissant (10, 11) dans la direction d'extraction et
le corps de base (2) définissant une position de chacun de la pluralité de corps roulants (17), dans la direction d'extraction, par rapport au corps de base (2).

13. Système de guidage linéaire (3) avec
un élément rail (2) qui comprend deux surfaces de roulement orientées l'une vers l'autre et
un chariot (1) selon l'une des revendications précédentes,
le chariot (1) et l'élément rail (2) pouvant être déplacés l'un par rapport à l'autre linéairement dans, et à l'encontre de, la direction d'extraction (14) et
le premier et le deuxième élément coulissant (10, 11) étant respectivement en contact de friction avec une de surfaces de roulement.
